# EUROPEAN PATENT APPLICATION

(11) **EP 4 756 507 A1**
(43) Date of publication of application: **10.06.2026**
(21) Application number: 24383317.5
(22) Date of filing: 04.12.2024
(51) Int. Cl.: G02B 6/42, G02B 6/36, H02N 2/02

(54) **POSITIONING ASSEMBLY FOR POSITIONING THE TIP OF AN OPTICAL FIBER**

(71) Applicant: Fundació Institut de Ciències Fotòniques, 08860 Castelldefels (Barcelona) (ES); Institució Catalana De Recerca I Estudis Avançats (ICREA), 08010 Barcelona (ES)
(72) Inventor: Beattie, Eduardo, 08860 Castelldefels (ES); Ulrich, Lothaire, 08860 Castelldefels (ES); de Riedmatten, Hugues, 08860 Castelldefels (ES)
(74) Representative: Grünecker Patent- und Rechtsanwälte PartG mbB

(57) **Abstract**

The present invention relates to a positioning assembly for positioning a tip of an optical fiber, the positioning assembly comprising: a first positioning element configured to define and adjust a position of the tip of the optical fiber, a first piezoelectric element having a first axis of expansion and/or contraction, a second piezoelectric element having a second axis of expansion and/or contraction parallel to the first axis, a first plate contacted with the first piezoelectric element, and a second plate contacted with the second piezoelectric element, wherein the first plate and the second plate are mechanically coupled to the first positioning element, wherein the first plate and the second plate each act as a lever so that a movement of the first plate and/or the second plate in a direction along the first axis, induced by an expansion and/or contraction of the first piezoelectric element and/or second piezoelectric element respectively, results in a movement of the first positing element, and wherein the movement of the first positioning element has a component perpendicular to the first axis.

## Description

The present invention relates to a positioning assembly for positioning a tip of an optical fiber, a fiber nanopositioner comprising the positioning assembly and an optical system comprising the fiber nanopositioner.

### Technical background

The main application of a positioning assembly for positioning a tip of an optical fiber is to operate an open Fabry-Perot fiber cavity. This is an optical resonator, which enables enhanced light-matter interaction useful for quantum technologies and ultrasensitive microscopy. The cavity is formed by two mirrors: one is a macroscopic planar mirror onto which samples can be deposited, and the other is on the tip of the fiber, which can be scanned over the planar mirror to locate the samples. By such a setup, ultrasensitive scattering microscopy to detect single nanoparticles can be performed. Due to the resonant nature of the cavity, even weak scattering of light from the sample results in a large variation of the optical power of the obtained signal. Furthermore, by such a setup the emission obtained from a quantum emitter located in the cavity can be enhanced through the Purcell effect.

EP 4 318 072 A1 discloses an optical system for performing cavity-enhanced microscopy of a sample and a related method. To perform cavity-enhanced microscopy, the cavity has to be scanned over a resonance. However, lateral motion of the cavity often results in unwanted change in the cavity length, which drives the cavity off resonance. The disclosure aims to mitigate this effect and is based on the idea to store a precomputed description of a lateral motion of the sample synchronized with a variation of the cavity length of the optical cavity during a predefined time interval. Then, an actuator system is triggered to effect the entire lateral motion and the entire variation of the cavity length according to the stored description. During the lateral motion and the variation of the cavity length, light is introduced into the cavity and reflected and/or transmitted and/or scattered portions and/or light emitted from the cavity in response to the introduced light are detected to generate a sensor dataset. In this way, the lateral motion of the sample with respect to the optical cavity may be carried out in a synchronized manner with respect to the variation of the cavity length and also the data readout may be temporally synchronized with the motion of the sample with respect to the optical cavity and the variation of the cavity length. An important characteristic of this optical system is the range of lateral motion or scanning range that can be achieved within a single image. With a limited scanning range, it takes long observation times and more images to explore a larger range of the sample region.

Such optical systems for performing cavity-enhanced microscopy are typically cooled to cryogenic temperatures within the sample chamber of a cryostat. In order to reduce costs and energy consumption of the cryostat, it is desirable to have a compact optical system that can fit into a small volume of the cryostat's sample chamber. To this end, it is an object of the present invention to provide a positioning assembly that forms part of an optical system for use in cavity-enhanced microscopy with a compact design, while providing a large range of lateral motion.

This object is achieved by an assembly for positioning a tip of an optical fiber according to claim 1. Further embodiments are represented by the dependent claims.

### Summary of the invention

The assembly for positioning a tip of an optical fiber according to the present invention comprises a first positioning element configured to define and adjust a position of the tip of the optical fiber, a first piezoelectric element having a first axis of expansion and/or contraction, a second piezoelectric element having a second axis of expansion and/or contraction substantially parallel to the first axis, a first plate contacted with the first piezoelectric element, and a second plate contacted with the second piezoelectric element, wherein the first plate and the second plate are mechanically coupled to the first positioning element, wherein the first plate and the second plate each act as a lever so that a movement of the first plate and/or the second plate in a direction along the first axis, induced by an expansion and/or contraction of the first piezoelectric element and/or second piezoelectric element respectively, results in a movement of the first positing element, and wherein the movement of the first positioning element has a component perpendicular to the first axis.

The first plate and the second plate are mechanically coupled to the first positioning element so that a movement of either plate results in a movement of the first positioning element with the movement having a component in a direction perpendicular to the movement of the plate. The first and second piezoelectric elements induce a movement of the respective plates, whereby the piezoelectric elements have an axis of expansion perpendicular to a component of the movement of the first positioning element. Hence, in order to induce the desired movement of the first positioning element, the piezoelectric elements do not have to be aligned with the direction of said movement. Instead, both piezoelectric elements can be aligned along a common axis and their expansion is transformed into a motion of the first positioning element having a component perpendicular thereto. In this manner, a more compact design can be realized. In other words, the first and second piezoelectric element can be aligned along the Z-axis (equal to the first axis) and induce a movement of the first positioning element having a component parallel to the X-Y-plane, whereby the X-Y-plane is perpendicular to the Z-axis.

The expression "plate" has to be understood in a broad manner. In principle, any surface that the first and second piezoelectric element press against can be identified with a first and second plate respectively.

The expression "substantially parallel" encompasses an inclination between 0° and 10° between the respective elements.

The first plate and/or the second plate can be attached to the first piezoelectric element and/or the second piezoelectric element respectively. This means that the plates follow the motion of the corresponding piezoelectric elements at all times. As an alternative, there may be no permanent connection between the plates and the piezoelectric elements. In other words, the plates have a resting position. When the piezoelectric element expands beyond the resting position, the respective plate follows this motion. Conversely, when the piezoelectric element contracts beyond the resting position (in the opposite direction of the expansion), the respective plate no longer follows the motion of the piezoelectric element. This construction simplifies the assembly and disassembly of the positioning assembly. The expression "contacted" covers both of these alternatives.

The induced movement of the first positioning element can be perpendicular to the first axis. The movement of the first positioning element having a component perpendicular to the first axis means that a vector describing the movement has a component perpendicular to the first axis. The amplitude of this component is the absolute value of the vector multiplied with sin(α), wherein α is the angle between the vector and the first axis.

The first plate and the first positioning element form a first lever. The second plate and the first positioning element form a second lever. Each of the first and second lever have a fulcrum point or a rotation axis. These are denoted as the first fulcrum point or first rotation axis, and the second fulcrum point or second rotation axis, respectively. The first lever and the second lever are not parallel to each other. The first lever and the second lever can be orthogonal to each other.

A piezoelectric element changes its length in response to the application of an electric field by exploiting the reverse piezoelectric effect. The first and/or second piezoelectric element can each be a piezoelectric stack comprising a plurality of individual piezoelectric units. In such a stack, the piezoelectric units are stacked along their common axis of expansion. In this manner, the strokes of each piezoelectric unit add up so that a large total stroke of the piezoelectric element can be obtained.

A direction of the movement of the first positioning element induced by the first piezoelectric element can be different from the direction of the movement of the first positioning element induced by the second piezoelectric element. When the two levers are orthogonal to each other, the directions of the respectively induced motions can be orthogonal to each other or have components that are orthogonal to each other.

In this manner, the first positioning element can be moved approximately within a plane. More precisely, the motion lies along the surface of a sphere or an ellipsoid, but can be approximated as a plane within the scanning range. The tip of the optical fiber can thus be positioned within said plane providing large freedom in the positioning. The plane can be perpendicular to the first axis and denoted as the X-Y-plane. An orthogonal arrangement of the levers maximizes the available scanning range in the X-Y-plane.

A distance between the first plate and the first fulcrum point can be smaller than a distance between the first positioning element and the first fulcrum point. A distance between the second plate and the second fulcrum point can be smaller than a distance between the first positioning element and the second fulcrum point.

This arrangement results in a mechanical amplification of the motion of the first plate and/or second plate enabling an increased displacement of the first positioning element. It is thus possible to achieve an increased scanning range of the lateral motion of the first positioning element without the need to accommodate larger piezoelectric elements or the like so that the overall assembly remains compact. Moreover, the mechanical stability is preserved so that the increased scanning range is not gained at the expense of worse mechanical stability.

By selecting the lengths of the lever arms with respect to the fulcrum point, a factor of mechanical amplification of the piezoelectric motion can be selected. The amplification factor can be in a range between 2 and 20, for instance.

The first lever may have a first rotation axis and the second lever may have a second rotation axis. The movement of the first positioning element may be a superposition of rotations around the first and second rotation axis. A distance between the first plate and the first rotation axis can be smaller than a distance between the first positioning element and the first rotation axis. A distance between the second plate and the second rotation axis can be smaller than a distance between the first positioning element and the second rotation axis. The first rotation axis and the second rotation axis may not be parallel to each other. The distances with respect to the rotation axes denote the shortest possible lines between the respective rotation axis and respective plate or positioning element.

Likewise, by selecting the distances with respect to the rotation axis, the factor of mechanical amplification of the piezoelectric motion can be selected for both levers.

The first piezoelectric element and/or the second piezoelectric element can be piezoelectric stacks with an extension along the first axis of between 5 mm and 95 mm, in particular between 20 mm and 50 mm. An exemplary value is 30 mm.

In the present assembly, the piezoelectric elements are parallel to the first axis, enabling smaller dimensions of the assembly in directions perpendicular to the first axis. This allows the use of cryostats with a smaller and elongated sample chamber. Moreover, it is possible to include long piezoelectric elements along the first axis and benefit from the fact that a longer piezoelectric element results in a greater expansion. These can induce a large movement of the first positioning element and provide a large scanning range within the X-Y-plane. For instance, a piezoelectric stack with a length of 30 mm result in a scanning range of about 130 µm at cryogenic temperatures.

The first positioning element can include a V-shaped notch. The V-shaped notch can be positioned parallel to the first axis. A depth direction, especially at the apex, of the V-shaped notch may be parallel to the first axis.

A V-shaped notch provides a simple yet efficient construction for guiding and positioning the tip of the optical fiber. The notch may push the fiber, in particular against a restoring force of the fiber, which ensures mechanical contact between the fiber and the notch and thereby provides a precise positioning of the fiber tip. At the same time, a V-shaped notch is a simple design that provides sufficient control over the alignment of the fiber tip. Alternatively, the first positioning element may comprise a through-hole that the fiber pierces through. Such a through-hole surrounds the optical fiber and provides positioning of the fiber tip analogous to the notch.

The first positioning element, the first plate and the second plate can be manufactured integrally. The positioning assembly optionally comprises titanium or consists of titanium. In other words, the first positioning element, the first plate and the second plate can be manufactured from a single piece, in particular from a single piece of titanium. Other materials such as aluminum, steel or copper may be used.

A component manufactured from a single piece typically provides higher mechanical stability than a component composed of multiple constituents because these individual constituents may move with respect to each other and cause a mismatch in the overall component. Titanium provides the additional advantage of having a low thermal expansion coefficient such that, when cooling the assembly to cryogenic temperatures, misalignment relative to the configuration at room temperature is small. In addition, titanium is machinable and off-the-shelf components such as screws are readily available. It is highlighted that screws of a mismatched material (e.g. aluminum or steel) may loosen during a cooldown process of the positioning assembly. This problem does not occur in an assembly integrally made of titanium.

The positioning assembly may further comprise a third piezoelectric element, in particular a piezoelectric stack, having a third axis of expansion and/or contraction, and a second positioning element configured to define and adjust a position of the tip of the optical fiber, the second positioning element contacting the third piezoelectric element, wherein an expansion and/or contraction of the third piezoelectric element results in a movement of the second positioning element along the third axis.

The first positioning element and the second positioning element thus collaborate in defining and adjusting the position of the tip of the optical fiber. The third piezoelectric element provides an additional degree of freedom in that it enables a movement of the second positioning assembly along a further axis. In particular, the third axis is not parallel to the movement of the first positioning element induced by the first piezoelectric element and/or the second piezoelectric element. In this manner, the tip of the optical fiber can be adjusted along all three spatial directions.

The third axis may be substantially parallel to the first axis. The third piezoelectric element may be configured to adjust the position of the tip of the optical fiber along the Z-axis.

In this manner, all three piezoelectric elements have substantially parallel axes of expansion and/or contraction. This design allows for a very compact positioning assembly.

The second positioning element and the third piezoelectric element may not be attached to each other. In this case, the third piezoelectric element is configured to press against and displace the second positioning element. When the third piezoelectric element expands beyond a resting position of the second positioning element, the third piezoelectric element and the second positioning element are in contact, and the second positioning element follows the movement of the third piezoelectric element. Contrarily, when the third piezoelectric element contracts beyond the point where the second positioning element lies in its resting position, then the second positioning element no longer follows the motion of the third piezoelectric element, but remains in its resting position.

Alternatively, the second positioning element and the third piezoelectric element may be attached to each other. The second positioning element may thus follow the motion of the third piezoelectric element at all times.

The positioning assembly may further comprise a fourth piezoelectric element attached to the second positioning element, wherein the fourth piezoelectric element is a shear piezoelectric chip or stack. In particular, there may be no direct contact between the third and fourth piezoelectric element.

While the third piezoelectric element can be configured to position the fiber tip along the Z-axis (first axis), the fourth piezoelectric element is configured to modulate the position of the optical fiber along the Z-axis with high frequency. In a setup employing the positioning assembly, as will be explained in more detail below, an optical cavity is formed between the fiber tip and a mirror. Said modulation changes the distance between the mirror and the fiber tip, thus affecting the resonance wavelength of the cavity. In this way, the resonance wavelength of the optical cavity can be scanned at high frequencies, enabling fast scanning. Fast scanning reduces the data acquisition time required when scanning a given sample. Typical modulation frequencies achievable by this design are in the range of 1 MHz or higher and thus between one and three orders of magnitude higher than in comparable setups of the prior art.

In principle, this scanning modulation may be performed by the third piezoelectric element as well. However, given that the third piezoelectric element has to move the second positioning element as well, it has to modulate a higher mass resulting in a reduced achievable modulation frequency. Conversely, the fourth piezoelectric element can be designed in such a manner that it only moves its own mass and the optical fiber, which considerably reduces the mass and increases the modulation frequency, for instance up to between 1 MHz and 10 MHz.

The top surface of the fourth piezoelectric element may be inclined with respect to the third axis, wherein the inclination angle is between 2° and 30°, in particular between 5° and 15°. The angle may particularly be 7°.

When changing the position of the fiber tip with the first positioning element, it presses against the fiber tip and thereby bends the fiber so that the alignment of the tip, despite the inclination angle, is again parallel to the first axis. At the same time, the fiber maintains a restoring force in order to ensure that the fiber tip will follow the motion of the first positioning element. The chosen angle provides a sufficient restoring force and does not cause mechanical damage of the fiber or incomplete total internal reflection within the fiber core.

The top surface of the fourth piezoelectric element may be provided with a groove. A longitudinal axis of the groove may have a component parallel to the first axis.

The grove can be used to easily position the optical fiber on the top surface of the fourth piezoelectric element since the groove directly provides correct placement and alignment for the optical fiber. Further, the fiber can be attached easily to the fourth piezoelectric element, for instance by gluing the fiber into the groove. The groove may be machined, drilled or filed in the top surface of the fourth piezoelectric element. Further, the longitudinal axis of the groove may have a component parallel to the first axis simplifies the correct directional alignment of the fiber.

The first piezoelectric element can further be provided with adjustment means for adjusting the position of the first piezoelectric element with respect to the first plate. The second piezoelectric element can further be provided with adjustment means for adjusting the position of the second piezoelectric element with respect to the second plate. The third piezoelectric element can further be provided with adjustment means for adjusting the position of the third piezoelectric element with respect to second positioning element. The adjustment means can be provided separately or they can be provided within a combined adjustment means that combines the three adjustment functions.

Each piezoelectric element commonly provides a displacement of the respective plate in the range from 1 µm to 100 µm, depending on the dimension of the element and the driving voltage. The adjustment means provide the possibility of coarse adjustment between the piezoelectric elements and the respective positioning element, first plate or second plate respectively, which may be required during buildup of the assembly or in case of mismatch due to thermal expansion. Coarse adjustment refers to distances between about 100 µm and 1 cm, ranges that cannot normally be compensated by piezoelectric elements. Coarse adjustment with the adjustment means may be performed by hand.

The positioning assembly may further comprise a support structure, wherein the support structure comprises support adjustment means for adjusting the position of the first positioning element.

The possibility to adjust the position of the first positioning element independent of the remaining elements of the positioning assembly provides an additional degree of freedom to compensate potential offset between the first positioning element and the fiber.

An adjustable spacer may further be provided between the first positioning element and the second positioning element. The adjustable spacer may have a variable height that can be set to a particular value.

When the fiber is attached to the fourth piezoelectric element or the second positioning element respectively, the position of its tip is not precisely defined. As a result, it is necessary to be able to adjust the position of the first positioning element such that it makes contact with the fiber at the right point. This relative position between the first positioning element and the second positioning element can be adjusted by the adjustable spacer. In this way, initial and/or coarse alignment of the optical fiber with respect to the first positioning element can be achieved. Moreover, adjusting the relative position between the first positioning element and the fiber tip by means of an adjustable spacer provides high convenience.

Instead of an adjustable spacer, spacers with fixed height can be used. This provides the advantage of improved stability and reproducibility. However, in order to replace the spacer, the assembly has to be disassembled, which reduces convenience.

The present invention further provides a fiber nanopositioner comprising the previously described positioning assembly and an optical fiber with a fiber tip, wherein the first positioning element is configured to adjust a position of the fiber tip within a plane perpendicular to the first axis.

As explained above, the fiber nanopositioner is configured to adjust the position of the fiber tip within a plane perpendicular to the first axis. It is thus possible to scan the position of the fiber tip across this plane. In particular, the fiber nanopositioner provides the advantages brought about by the positioning assembly as explained previously.

For a positioning assembly comprising the fourth piezoelectric element attached to the second positioning element, the optical fiber may be attached to a top surface of the fourth piezoelectric element. The optical fiber may be attached directly to the top surface of the fourth piezoelectric element.

As explained previously, the fourth piezoelectric element provides for scanning of the length of the cavity formed by the fiber tip and a mirror and thus a modulation of the cavity's resonance wavelength. Attaching the fiber to the fourth piezoelectric element transmits the movement of the fourth piezoelectric element to the optical fiber in a simple yet efficient manner.

The fiber tip may protrude from a front edge of the top surface of the fourth piezoelectric element by about 2 mm to 20 mm, in particular 5 mm to 10 mm. An exemplary value is 7 mm.

The optical fiber may be glued directly onto the top surface of the fourth piezoelectric element, wherein at least a part of the fiber consists of the core and cladding. In particular, the part of the fiber directly glued onto the top surface of the fourth piezoelectric element consists of the core and the cladding. Alternatively, a protective layer may be inserted between the top surface and the glued part of the optical fiber consisting of the core and the cladding. The protective layer may be a 20 µm thick copper layer.

A core and a cladding are typically the minimal components of an optical fiber to function properly. In addition, optical fibers often have a coating to protect the fiber from mechanical damage and other external impact. However, any component not strictly required for proper operation adds mass to the part of the assembly actuated by the fourth piezoelectric element. By minimizing this mass to only the mass of the fiber core and cladding, the glue and the piezoelectric element itself, the modulation frequency of the position of the optical fiber can be maximized. In other terms, no components attached to the moving part of the fourth piezoelectric element beyond those fundamentally required for the operation are present, which avoids unnecessary mass. Applications allowed by a high modulation speed include temporal shaping of photon emission and ultrafast scanning in microscopy.

The present invention also provides an optical system comprising the previously described fiber nanopositioner, and an optical assembly comprising a mirror whose reflective surface faces the fiber tip so that the fiber tip and the mirror form an optical resonator, and in particular comprising a lens arranged at a distance from the mirror and configured to collimate light from the optical resonator transmitted through the mirror, and mounting means for mounting the mirror and the lens at a fixed distance from each other.

The invention, thus, does not only provide an assembly for scanning and manipulating the optical fiber forming a part of the optical cavity, but also to collect the light emitted from the cavity.

The distance between the mirror and the lens can be set such that the light from the cavity is collimated by the lens or such that the light from the cavity is focused on a detector. For instance, the optical distance between the reflective surface of the mirror and the lens can be equal to the focal length of the lens.

The mirror can be a planar mirror. The mirror and the fiber may form a stable cavity, meaning that the light is confined to the cavity.

The mounting means may comprise a first barrel, a first retaining ring and a second retaining ring, wherein the mirror and the lens are arranged within the first barrel having a thread on its inside, wherein the mirror is fixed against a lip at an end of the first barrel by the threaded first retaining ring inside the first barrel, wherein the lens is arranged at a fixed distance from the mirror by the first retaining ring, and wherein the lens is fixed against the first retaining ring by the threaded second retaining ring inside the first barrel.

Hence, the first retaining ring may define the distance between the mirror and the lens. In other words, the thickness of the first retaining ring may correspond to the distance between the mirror and the lens. The lip may reduce the inner diameter of the first barrel so as to keep the mirror inside the first barrel.

The optical components (mirror and lens) are thus provided inside a barrel at a fixed distance from each other. This setup provides high mechanical stability and reproducibility, and is easy to assemble as it only consists of very few components.

The optical assembly may further comprise a second barrel threaded on the inside, wherein the first barrel is also threaded on its outside and screwed inside the second barrel, and wherein the first barrel is locked inside the second barrel by a threaded third retaining ring. As the first barrel is arranged within the second barrel, the first barrel may be referred as inner barrel and the second barrel may be referred to as outer barrel. The first barrel and the second barrel may have the shape of a hollow cylinder

A position of the first barrel within the second barrel is fixed by the third retaining ring only. Nonetheless, the position of the mirror with respect to the positioning assembly can be adjusted easily by changing the position of the first barrel, whereby the position of the first barrel can be changed conveniently by rotating it within the thread of the second barrel. In addition, the third retaining ring is sufficient to securely fix the position of the first barrel within the second barrel. When pressing the third retaining ring against the first barrel, the static friction between the threadings secures the first barrel.

The threading on the outside of the inner barrel may have a slope of about 500 µm/turn. This allows for convenient adjustment of the first barrel and thus of the mirror position and the lens position over a range of multiple millimeters and a high precision on the order of about 10 to 20 µm. A slope of the threading on the inside of the second barrel matches the slope of the threading on the outside of the first barrel.

The first barrel and the third retaining ring may be simultaneously adjustable by a pair of concentric spanners. The pair of concentric spanners may comprise an inner spanner and an outer spanner, wherein the inner spanner meshes with the first barrel, and wherein the outer spanner meshes with the third retaining ring.

This configuration with the concentric spanners provides for convenient adjustment of the mirror position with respect to the fiber tip. In addition, high precision can be achieved due to the threadings, i.e. the manual adjustment's precision can be on the order of about 10 µm.

The second barrel may be reversibly attached to the positioning assembly, in particular via screws.

Reversible attaching means such as screws allow for easy removal in order to quickly change or replace the mirror. Keeping the first barrel fixed with the third retaining ring, the first and second retaining ring inside the first barrel may be removed to take out the lens and the mirror, which are then reinserted in reversed order. The entire optical assembly is the reattached by the attaching means to form the cavity again. A trained personnel may perform the described replacement of the mirror on about 15 minutes or less.

A sample may be attached to the reflective surface of the mirror.

This way, the described optical system may be used for optical study of the microscopic samples attached to the surface of the mirror. Moreover, it is convenient to insert samples into the cavity as the mirror can be coated with the sample before being mounted in the optical assembly. Also, replacing the sample can be performed conveniently by replacing the mirror.

Several or all components of the optical system may comprise or consist of material like titanium, steel, aluminum or copper. This concerns the first, second and third retaining ring, the inner barrel, the outer barrel and/or the concentric spanners. All these components may be made from the same material. In this way, the components have the same thermal expansion coefficient, avoiding relative misalignment when being subject to a change in temperature. For the reasons given above, titanium may be preferable. As an alternative, the concentric spanners can be made of steel, while the remaining components are made of titanium.

The optical system may be introduced into a sample chamber of a cryostat. The cryostat may be a closed-cycle sample-in-exchange-gas cryostat. Closed cycle cryostats tend to impart vibrations onto the system due to the pumping cycle of the compressed helium. This considerably worsens stability and therefore the achievable emission enhancement. The sample space in a cryostat system may be under vacuum or contain an atmosphere of low pressure gas known an exchange gas. In vacuum, the same has to be thermalized through direct thermal contact with a cold plate, typically via soft copper braids or foils. On the other hand, in a sample-in-exchange-gas cryostat, the thermalization is done by the exchange gas itself and thus no mechanical contact is required, reducing the transfer of noise onto the system. The present system being a closed sample-in-exchange-gas cryostat combines the advantage of low vibrations with reusing the helium in a closed cycle, which reduces operation cost.

The present invention further provides an optical assembly, comprising a mirror, and a lens arranged at a distance from the mirror and configured to collimate light from the optical resonator transmitted through the mirror, and mounting means for mounting the mirror and the lens at a fixed distance from each other. In particular, a reflective surface faces away from the lens.

The mounting means may comprise a first barrel, a first retaining ring and a second retaining ring, wherein the mirror and the lens are arranged within the first barrel having a thread on its inside, wherein the mirror is fixed against a lip at an end of the first barrel by the threaded first retaining ring inside the first barrel, wherein the lens is arranged at a fixed distance from the mirror by the first retaining ring, and wherein the lens is fixed against the first retaining ring by the threaded second retaining ring inside the first barrel.

The optical assembly may further comprise a second barrel threaded on the inside, wherein the first barrel is also threaded on its outside and screwed inside the second barrel, and wherein the first barrel is locked inside the second barrel by a threaded third retaining ring. As the first barrel is arranged within the second barrel, the first barrel may be referred as inner barrel and the second barrel may be referred to as outer barrel. The first barrel and the second barrel may have the shape of a hollow cylinder.

The threading on the outside of the inner barrel may have a slope of about 500 µm/turn. This allows for convenient adjustment of the first barrel and thus of the mirror position and the lens position over a range of multiple millimeters and a high precision on the order of about 10 to 20 µm. A slope of the threading on the inside of the second barrel matches the slope of the threading on the outside of the first barrel.

A sample may be attached to the reflective surface of the mirror.

Several or all components of the optical system may comprise or consist of material like titanium, steel, aluminum or copper. This concerns the first, second and third retaining ring, the inner barrel, the outer barrel and/or the concentric spanners. All these components may be made from the same material. In this way, the components have the same thermal expansion coefficient, avoiding relative misalignment when being subject to a change in temperature. For the reasons given above, titanium may be preferable. As an alternative, the concentric spanners can be made of steel, while the remaining components are made of titanium.

The first barrel and the third retaining ring may be simultaneously adjustable by a pair of concentric spanners. The pair of concentric spanners may comprise an inner spanner and an outer spanner, wherein the inner spanner meshes with the first barrel, and wherein the outer spanner meshes with the third retaining ring.

The longitudinal axis of the first barrel and/or the second barrel can be parallel to the first axis. Thus, several elements of the optical system, including the mirror, the lens, the first barrel and the second barrel, can be aligned along a common optical axis.

The optical system may further comprise a frame structure for supporting the optical system, wherein the optical system is suspended on multiple springs, and wherein the springs extend between the optical system and the frame structure.

By suspending the optical system on springs, the optical system can be decoupled from external vibrations such as noise. In this manner, the stability of the optical system and its performance are improved.

A resonance frequency of the optical system suspended by the springs can be in the range between 1.5 Hz and 30 Hz. Given that typical frequency ranges of external noise are higher than this resonance frequency range, the suspension provides a high suppression of the noise sensitivity of the optical system because the noise is barely transferred to the optical system.

An arrangement of the springs may lock all six degrees of freedom, including three translational degrees of freedom and three rotational degrees of freedom. In other words, the arrangement provides a restoring force along all three translational directions and three rotational directions.

The optical system may be suspended on nine springs in total. The optical system may be coupled to the frame structure via six spring on its top side and via three springs on its bottom side. This arrangement has been found to efficiently lock all translational and rotational degrees of freedom and thus provides excellent decoupling from external noise. The overall optical system thus provides excellent mechanical stability and efficient decoupling from external noise sources, thus ensuring a maximal and stable enhancement of the light-matter interaction.

### Short description of the drawings

Further features and advantages will now be described in combination with the enclosed figures.
- Figure 1A: illustrates a positioning assembly for positioning a tip of an optical fiber in an oblique view;
- Figure 1B: illustrates a detailed top view of the positioning assembly in Figure 1A;
- Figure 1C: illustrates a detailed side view of the positioning assembly in Figure 1A
- Figure 2A: illustrates a partial positioning assembly for positioning a tip of an optical fiber including a support structure in an oblique view;
- Figure 2B: illustrates a detailed top view of the positioning assembly in Figure 2A;
- Figure 2C: illustrates a detailed side view of the positioning assembly in Figure 2A;
- Figure 3: illustrates a positioning assembly for positioning a tip of an optical fiber in an oblique view;
- Figure 4: illustrates an optical system in a cross-sectional view;
- Figure 5: illustrates a detailed view of the optical assembly within the optical system according to Figure 4; and
- Figure 6: illustrates an optical system suspended on springs within a frame structure.

### Detailed description of the drawings

In the following and in the figures, if not specified to the contrary, the same reference signs denote the same or corresponding elements in the described embodiments.

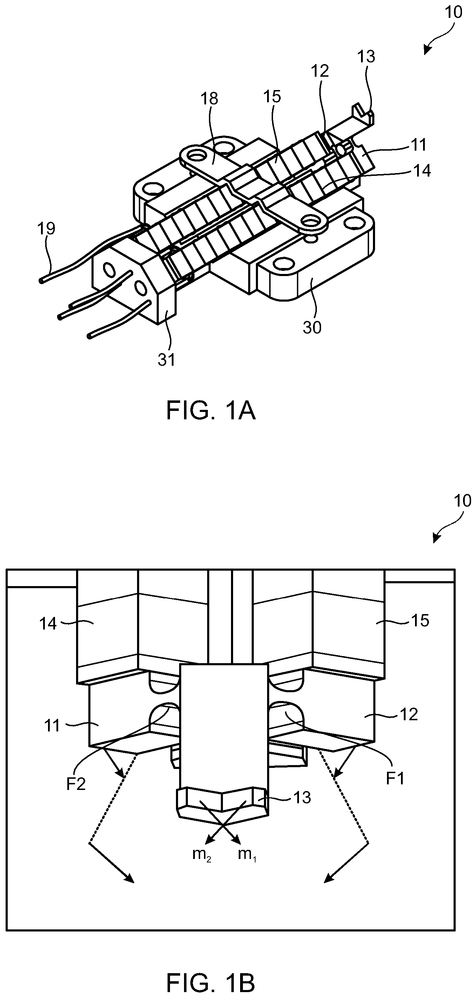

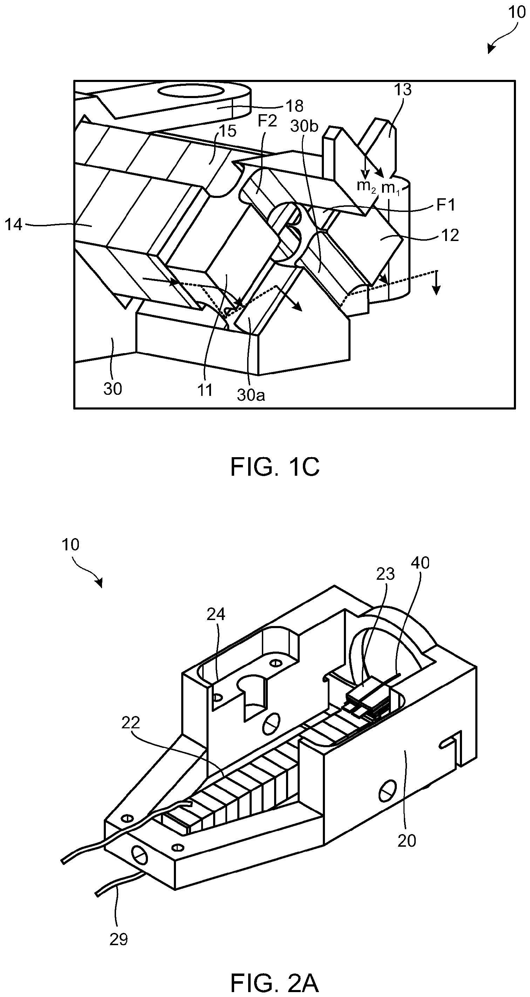

Figure 1A illustrates a positioning assembly 10 according to an embodiment of the present invention. The assembly comprises a first positioning element 13 for positioning the tip of an optical fiber (not shown), as well as a first plate 11 and a second plate 12. These components will be explained in more detail in the context of Figs. 1B and 1C, which are more detailed illustrations.

In addition, the positioning assembly 10 comprises a first piezoelectric element 14 contacted with the first plate 11 and a second piezoelectric element 15 contacted with the second plate 12. Therein, "contacted" may be paraphrased as "brought into contact". The plates and the piezoelectric elements do not have to be in contact as all times, i.e. they do not have to be mechanically connected, but this is nonetheless possible. For instance, when the piezoelectric element contracts beyond a resting position of the respective plate, it may no longer be in contact with the corresponding plate because the plate no longer follows the contraction of the piezoelectric element. Both piezoelectric elements 14, 15 are piezoelectric stacks with a total length along their respective axis of expansion and/or contraction between 5 mm and 95 mm each. The axes of the piezoelectric elements 14, 15 are aligned such that they are perpendicular to the surface of the first plate 11 and second plate 12, which are contacted with the respective piezoelectric element. For instance, the piezoelectric elements 14, 15 can have a length of 30 mm. This length can result in a stroke on the order of 20 µm at cryogenic temperatures.

The first piezoelectric element 14 is aligned along a first axis and the second piezoelectric element 15 is aligned along a second axis. The first axis is parallel to the second axis and can be denoted as the Z-axis.

The first piezoelectric element 14 and second piezoelectric element 15 are electrically connected to driving electronics (not shown) via wires 19, especially copper wires. These wires 19 can have a diameter of about 200 µm. By choosing such thin wires, the transmission of mechanical vibrations to the piezoelectric elements, which may be transferred to the first positioning element 13, is suppressed. In addition, the thin wires only add marginal mass to the system.

The positioning assembly 10 further comprises a support structure 30 that fulfills two purposes in the present embodiment. Firstly, the support structure 30 provides a bed for the first 14 and second piezoelectric element 15. A clamp 18 attached to the support structure 30 fixes the first piezoelectric element 14 and the second piezoelectric element 15 to the support structure 30. For instance, the clamp 18 can be mounted on the support structure 30 by means of screws. The first positioning element 13, the first plate 11 and the second plate 12 are also mechanically connected to the support structure 30.

Secondly, the support structure 30 can include adjustment means 31 configured to adjust the position of the first piezoelectric element 14 with respect to the first plate 11 and/or of the second piezoelectric element 15 with respect to the second plate 12. In particular, the respective adjustment means 31 is configured to adjust the position of the respective piezoelectric element along the first axis. For instance, the adjustment means 31 comprise set-screws for coarse adjustment of the respective piezoelectric element in the range between 10 µm and 1 cm. Thus, the coarse adjustment complements the fine adjustment provided by the stroke of the respective piezoelectric element.

In case set-screws are used as adjustment means 31, they may further fulfill the function of fixing the position of the first 14 and second piezoelectric element 15 with respect to the first plate 11 and second plate 12 respectively.

Figure 1B is a detailed view of the positioning assembly shown in Figure 1A focusing on the first positioning element 13, the first plate 11 and the second plate 12. These three components are manufactured from a single piece, for instance machined from a block of titanium. Titanium has a low thermal expansion coefficient such that misalignment between the components in response to a temperature change or gradient is reduced. Manufacturing the assembly from a single piece further improves mechanical stability of the overall assembly. Titanium offers the further advantage that many components such as screws are available off the shelf such that replacement of single elements is convenient. The expressions "manufactured integrally" and "manufactured from a single piece" have the same meaning herein.

The first positioning element 13 comprises a V-shaped notch. The notch is positioned parallel to the first axis. In the intended use of the positioning assembly 10, an optical fiber (not shown) can be positioned inside the notch. A movement of the first positioning element 13 thus also moves the fiber, whereby the notch clearly determines the path or alignment of the fiber tip.

The first plate 11 and the first positioning element 13 form a first lever with the first fulcrum point F1. Thus, a movement of the first plate 11 induced by the first piezoelectric element result in a corresponding movement of the first positioning element 13. Likewise, the second plate 12 and the first positioning element 13 form a second lever with a second fulcrum point F2. Thus, a movement of the second plate 12 induced by the second piezoelectric element result in a corresponding movement of the first positioning element 13. The first lever and the second lever may be orthogonal to each other. As a result, the respective movements of the first positioning element 13 are orthogonal. In any case, the first lever and the second lever are not parallel to each other.

In the following, the movement of the first positioning element 13 induced by the first 14 and second piezoelectric element 15 is explained. As said, the first piezoelectric element 14 expands and contracts along the first axis and consequently induces a movement of the first plate 11 along the respective arrow shown in the figure. Hence, the first plate 11 performs a pivoting forward movement around a first rotation axis crossing through the fulcrum F1. The first lever formed between the first plate 11 and the first positioning element 13 transforms this movement along the first axis into a movement having a component perpendicular to the first axis. As a result, for the shown configuration, the first positioning element 13 moves along the direction m1, which is not parallel to the first axis. Hence, the direction vector m1 can be decomposed into a component parallel to the first axis and a component perpendicular to the first axis. The same considerations apply for the second lever, which provides for a movement of the first positioning element along direction m2 owing to a pivoting movement of the first positioning element 13 around a second rotation axis crossing through the second fulcrum point F2. The angle between the first lever and the second lever may translate into the angle between the directions m1 and m2. For instance, when the levers are orthogonal to each other, so may be the directions m1 and m2.

Since the directions m1 and m2 are not parallel, the respective components perpendicular to the first axis are not parallel either and have said angle between the levers between each other. Hence, these components approximately span a plane. The movement of the first positioning element 13 is within this plane. In other words, the position of the first positioning element 13 can be scanned within the plane. This plane has components along the X-Y plane, which is the plane perpendicular to the Z axis.

For the adjustment of the fiber position within the X-Y-plane, only the component of the movement of the first positioning element 13 within the X-Y-plane matters, while the component perpendicular to the X-Y-plane (parallel to the first axis) has no impact on the fiber positioning. When the first positioning element 13 moves along the first axis, it slides along the optical fiber, thereby not changing the fiber position.

A distance between the first rotation axis and the first plate 11 is smaller than a distance between the first rotation axis and first positioning element 13. A distance between the second rotation axis and the second plate 12 is smaller than a distance between the second rotation axis and first positioning element 13. The distance between the first rotation axis and the first plate 11 is the shortest possible line between the two. The analogous definition applies to the other cases.

This may result in a mechanical amplification of the movement of the first plate 11 and the second plate 12 so that the first positioning element 13 can be moved over a large distance. This context is illustrated by the pairs of arrows showing the amplification of the movement of the first plate 11 and the second plate 12. For instance, the above-mentioned stroke of the 20 µm provided by the first 14 and second piezoelectric element 15 can be amplified to a movement of about 50 µm to 80 µm within the plane perpendicular to the first axis. This available scanning range is about an order of magnitude larger than those known from the prior art. A large scanning range can reduce the data acquisition time because a larger region of the mirror can be scanned within a single image so that fewer images are required to explore said region.

Alternatively, a distance between the first rotation axis and the first plate 11 is smaller than a distance between the first rotation axis and the V-shaped notch. A distance between the second rotation axis and the second plate 12 is smaller than a distance between the second rotation axis and the V-shaped notch.

At the fulcrum points F1, F2, the respective lever may have a reduced material thickness. In particular, the material thickness at the fulcrum points is smaller than the material thickness of the first plate 11 and the second plate 12. In this way, the force required to move the plates by bending the construction at the respective fulcrum point and to induce a movement of the first positioning element 13 is reduced. Moreover, the bending occurs at the regions of reduced material thickness leading to a rotation about the fulcrum points.

The entire construction in Figures 1A and 1B, optionally including the support structure 30, can also be referred to as the XY-arm because it is responsible of the positioning of the tip of the optical fiber within the X-Y-plane.

As can be seen from Figure 1A and the previous explanations, the first and second piezoelectric elements 14, 15, which considerably contribute to the overall size of the positioning assembly 10, extend along the first axis. Thus, in order to induce a movement of the first positioning element 13 within the X-Y-plane, it is not necessary to provide the piezoelectric elements parallel to the X-Y-plane. Instead, the overall construction of the positioning assembly 10 is slim and compact with the major extension along the first axis.

The first and second piezoelectric elements 14, 15 can be stacks of single piezoelectric chips or units. The length of each piezoelectric element can be 30 mm (along the first axis), for example. At room temperature, the piezoelectric elements typically have a stroke on the order of 10⁻³ times their length over a nominal voltage range between 0 and 75 V. However, at cryogenic temperatures (especially less than 4 Kelvin), this stroke may decrease considerably. At the same time, the piezoelectric elements can withstand a higher driving voltage such that the reduction in the stroke can be partially compensated with a higher driving voltage. The driving voltage is provided via the wires 19.

Another detailed view of the positioning assembly 10 is presented in Fig. 1C, further illustrating the first and second rotation axis. As most of the components have already been introduced, reference is made to Figs. 1A and 1B. The first plate 11 and the second plate 12 further have a mechanical connection to the support structure 30. In this way, the overall positioning assembly 10 provides high mechanical stability and can even be manufactured integrally. A connecting portion 30a connecting the first plate 11 with the support structure 30 may have a reduced material thickness such that it requires less force to induce the pivoting motion in response to the expansion of the first piezoelectric element 14. Likewise, a connecting portion 30b connecting the first plate 12 with the support structure 30 may have a reduced material thickness such that it requires less force to induce the pivoting motion in response to the expansion of the first piezoelectric element 15.

As already explained previously, the first positioning element 13 not only performs a rotation around the fulcrum points F1 and F2, but around a first and second rotation axis. The first rotation axis crosses through the connecting portion 30a and the first fulcrum point F1. The second rotation axis crosses through the connecting section 30b and the second fulcrum point F2. The resulting movement of the first positioning element 13 is thus a superposition of the pivoting motions around the first rotation axis and the second rotation axis. The described factor of mechanical amplification is then given by the distance between the first positioning element 13 and the respective rotation axis divided by the distance between the respective plate 11/12 and the respective rotation axis.

Figure 2A shows another configuration of the positioning assembly further comprising a Z-arm (to be explained in the following). For better visualization, the XY-arm of Figure 1A is omitted in this figure.

The positioning assembly 10 further comprises a third piezoelectric element 22, whose axis of expansion and/or contraction is parallel to the first axis. Thus, all three piezoelectric elements are substantially aligned in parallel along the first axis. The third piezoelectric element 22 is supplied with a driving voltage via the wires 29. The third piezoelectric element 22 can be a piezoelectric stack.

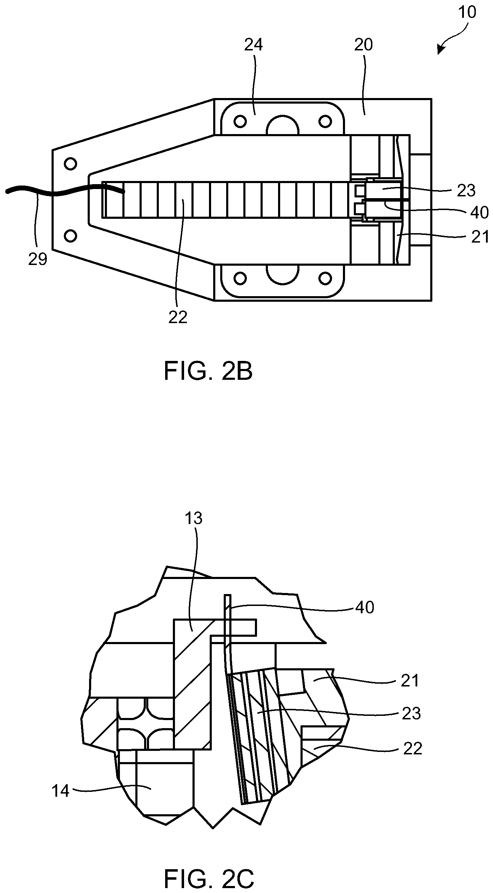

On its one end, the third piezoelectric element 22 contacts the second positioning element 21 (see Figure 2B and the more detailed description below). On its other end, the third piezoelectric element 22 can be provided with adjustment means (not shown) for adjusting the position of the third piezoelectric element 22 with respect to the second positioning element 21 along the first axis. The adjustment means, for instance set-screws, provide coarse alignment between these elements on a scale between about 10 µm and 1 cm. In case set-screws are used as adjustment means, they may further fulfill the function to fix the position of the third piezoelectric element 22 with respect to the second positioning element 21.

On top of the second positioning element 21, there is provided a fourth piezoelectric element 23, which is a shear piezoelectric element. A movement of the second positioning element 21 along the first axis thus also moves the fourth piezoelectric element 23 along the first axis. The optical fiber 40 is attached to the top surface of the fourth piezoelectric element 23. In particular, the optical fiber 40, which may only comprise a cladding and a core, is glued directly into a groove formed on the top surface of the fourth piezoelectric element 23. This reduces the mass to be moved by the fourth piezoelectric element 23 and achieves a higher modulation frequency of the position of the fiber tip.

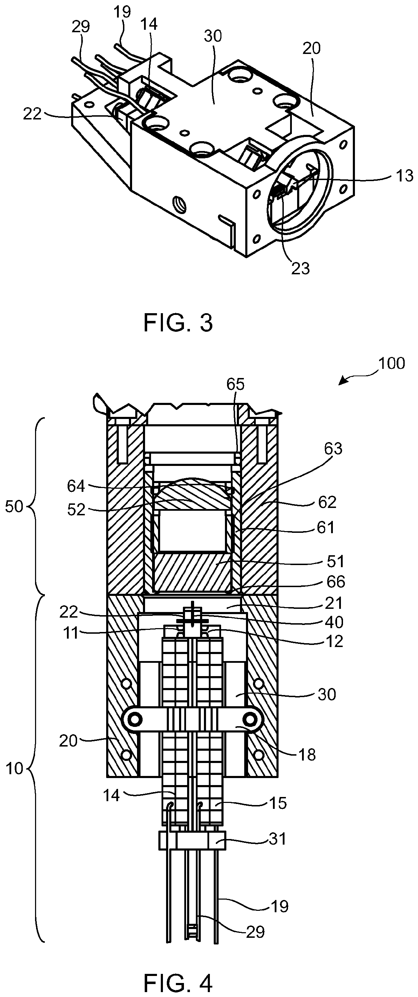

The components shown in Figure 2A and described herein are configured to provide a movement of the optical fiber along the Z-axis or the first axis. Therefore, this part of the positioning assembly 10 is referred to as the Z-arm. The Z-arm is further provided with an assembly support structure 20 configured to mount the described components in mechanically stable manner. The second positioning element 21 is mechanically connected to the assembly support structure 20. Further, the assembly support structure 20 includes recesses 24 configured to host the support structure 30 of the XY-arm. The XY-arm and the Z-arm can thus be assembled to form the complete positioning assembly 10, as will be described in more detail in the context of Figure 3.

After all, the three piezoelectric 14, 15, 22 elements are arranged in parallel along the first axis and nonetheless can induce a motion of the optical fiber 40 along all three spatial directions. Hence, the compact configuration provides full control over the positon of the tip of the optical fiber 40. Moreover, the position of the optical fiber 40 along the first axis is governed by the third piezoelectric element 22 and the fourth piezoelectric element 23. While the third piezoelectric element 22 is configured to adjust the fiber tip position along the first axis, the fourth piezoelectric element 23 provides high-frequency modulation around this position.

Figure 2B shows the shows the positioning assembly of Figure 2A as a top view. Since the other elements of the positioning assembly 10 were explained in the context of Figure 2A, repetitive elaborations are omitted at this point. The purpose of this figure is to better illustrate the configuration and purpose of the second positioning element 21. The second positioning element 21 is a plate extending between opposite sides of the assembly support structure 20 perpendicular to the first axis. When the third piezoelectric element 22 expands, it presses against the second positioning element 21 and moves it forward along the first axis. The second positioning element 21, by its construction provides a restoring force such that upon the third piezoelectric element 22 contracting again, it returns to a resting position. Since the fourth piezoelectric element 23, with the optical fiber on top thereof, is mounted on the second positioning element 21, the movement of the third piezoelectric element transforms into a movement of the optical fiber 40 along the first axis (Z-axis).

Moreover, the fourth piezoelectric element 23 is mounted on the second positioning element 21, but has no direct contact to the third piezoelectric element 22.

Figure 2C is a detailed side view of the positioning assembly 10 focusing on the collaboration between the first positioning element 13 and the second positioning element 21. The fourth piezoelectric element 23 is positioned on a wedge-shaped upper part of the second positioning element 21. In this manner, the top surface of the fourth piezoelectric element 23 is inclined with respect to the first axis by the angle of the wedge. This angle can be 7°, for example.

The optical fiber protrudes from the front edge of the top surface of the fourth piezoelectric element 23 by about 2 mm to 20 mm. An exemplary value is 7 mm. Hence, the protruding part of the optical fiber 40 is also angled with respect to the first axis. However, the first positioning element 13 is configured to press against the protruding part in a manner that the fiber is bent and that fiber tip 41 aligns in parallel with the first axis (horizontal in the figure) again. The advantage of the angled construction lies in that the fiber 40 provides an intrinsic restoring force and thus follows the movement of the first positioning element 13. The protruding part of the optical fiber must not be too long as this would reduce the restoring force and would be more susceptible to picking up external noise.

Figure 3 is an oblique view of a positioning assembly 10 comprising the previously described XY-arm (see figure 1A) and the Z-arm (see figure 2A). The support structure 30 of the XY-arm fits into the recesses 24 provided on the Z-arm (in the assembly support structure 20) and can be fixed in this position by screws. In this manner, the first positioning element 13 is brought into contact with the protruding part of the optical fiber in order to enable the adjustment of the fiber tip within the plane perpendicular to the first axis. As the second positioning element 21 and the third piezoelectric element 22 provide for the adjustment along the first axis, the positioning assembly 10 now provides for adjustment of the optical fiber 40 along all three dimensions.

In the recess 24, between the assembly support structure 20 and the support structure 30, spacers (not shown) may be inserted in order to adjust the position of the first positioning element 13 with respect to the optical fiber 40. The spacers may have fixed height or may be adjustable in their height (adjustable spacers).

Figure 4 shows an optical system 100 in section view, comprising the previously described positioning assembly 10 and an optical assembly 50. The positioning assembly 10 and the optical assembly 50 are attached reversibly to each other, for instance via screws. The optical assembly 50 comprises a mirror 51, a lens 52 and mounting means. The mounting means include three retaining rings 63, 64, 65, a first barrel 61 and a second barrel 62.

A reflective surface of the mirror 51 faces the tip of the optical fiber 40 so that an optical cavity is formed between the two components. The reflective surface of the mirror 51 can be coated with a sample like nanoparticles, nanotubes, diamonds with vacancy centers etc. The Fabry-Perot cavity formed by the mirror and the fiber tip may thus be employed to study and manipulate interaction between light and the sample for use in ultrasensitive microscopy or emission enhancement.

The first barrel 61 is basically tube with a thread on its inside. On one end, the first barrel 61 has a lip 66, which narrows the inner diameter of the first barrel 61. The mirror 51 is arranged within the first barrel 61 in such a manner that it is held inside the first barrel 61 by the lip 66, whereby the reflective surface faces the lip 66. On the opposite side of the mirror 51, a first retaining ring 63 is located, so that the mirror is held in position between the lip 66 and the first retaining ring 63. The first retaining ring is threaded so that it meshes with the thread on the inside of the first barrel 61.

The lens 52 is mounted inside the first barrel at a fixed distance from the mirror 51. The distance can be chosen such that light from the cavity transmitted through the mirror is collimated by the lens 52. For instance, the fixed distance can be such that the focal point lens 52 is at the surface of the mirror 51 facing the fiber. That mirror surface is reflective. The lens 52 can be a plano-convex lens with the plane surface facing the mirror 51. To this end, the first retaining ring 63 has thickness (along the longitudinal axis of the first barrel 61) that corresponds to said fixed distance. The second retaining ring 64 is also threaded so that it meshes with the thread of the first barrel 61. The second retaining ring 64 is located on the opposite side of the lens 52 and fixes its position between the first retaining ring 63 and the second retaining ring 64. In summary, the mirror 51 and the lens 52 are mounted inside the first barrel 61 by means of the lip 66 and two retaining rings 63, 64. This represents a simple yet solid and compact design for the relevant optical components of the optical assembly 50.

The first barrel 61 is further threaded on its outside arranged within a second barrel 62 surrounding the first barrel 61. The second barrel 62 is threaded on the inside so that the first barrel 61 can be screwed within the second barrel 62. The position of the first barrel 61 within the second barrel 62 is secured by means of a threaded third retaining ring 65 meshing with the inner thread of the second barrel 62. When the third retaining ring 65 presses against the inner barrel 61, its position is firmly secured owing to static friction. The third retaining ring 65 is arranged on the end of the first barrel 61 turned away from the positioning assembly.

A slope of the thread on the outside of the first barrel 61 can be about 500 µm per turn. This allows a very convenient adjustment of the mirror position over a range of several centimeters, for example 2 cm, with a precision of about 20 µm.

The components of the optical assembly 50, including the barrels and retaining rings, can be manufactured from titanium. This metal has a low thermal expansion coefficient so that misalignments due to temperature changes (e.g. when introducing the optical system 100 into a cryostat) are minimized. Moreover, many off-the-shelf components made of titanium like screws are available, which makes the design and procurement of replacement parts convenient.

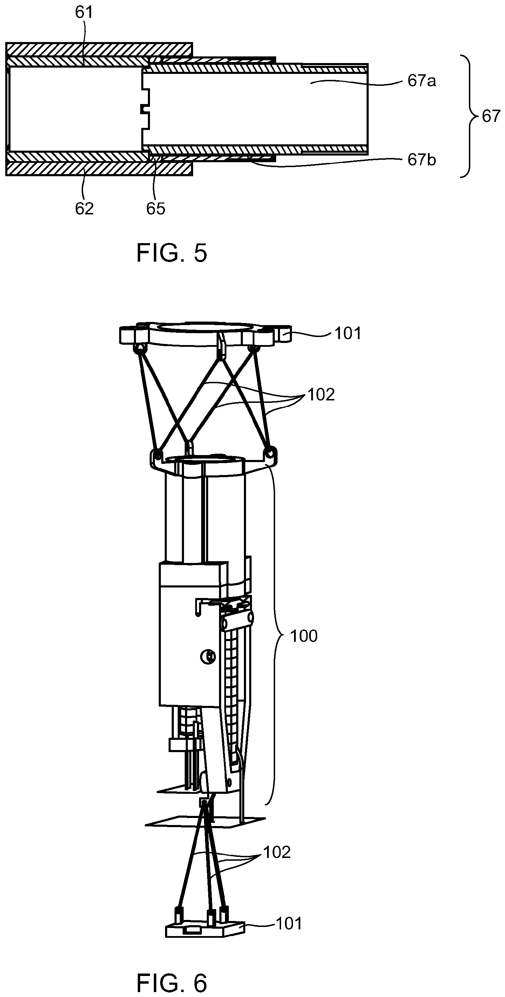

Figure 5 is a detailed view of the components constituting the optical assembly of the optical system 100 focusing on the function of the concentric spanners. In detail, the optical assembly 50 further comprises a pair of concentric spanners 67. These are configured to be operated by hand. The pair of concentric spanners 67 consists of an inner spanner 67a and an outer spanner 67b. The inner spanner 67a meshes with the first barrel 61 and allows rotating the same. The outer spanner 67b meshes with the third retaining ring 65 and allows rotating the same. Hence, the inner spanner 67a is configured to position the first barrel 61 within the second barrel 62 and the outer spanner is configured to secure the position of the first barrel 61 by fixing it with the third retaining ring 65. The inner spanner 67a and the outer spanner 67b can be rotated independent of each other and/or they can be operated at the same time.

In addition, the concentric spanners 67a, 67b are hollow. This allows light from the cavity to be transmitted through them. Consequently, the light from the cavity can be investigated while the cavity length is adjusted with the concentric spanners.

In this manner, the mirror position within the first barrel 61 with respect to the tip of the optical fiber can be adjusted conveniently and with high precision.

Finally, Figure 6 shows the previously described optical system 100 suspended on springs 102 within a frame structure 101, wherein the optical system is mounted such that its first axis extends vertically (i.e. along gravitational direction). The springs 102 extend between the optical system 100 and a frame structure 101. The frame structure 101 can be provided in two parts, above and below the optical system 100. Alternatively, the frame structure 101 may be provided like a cage surrounding the optical system 100.

The overall spring arrangement comprises nine springs 102. Among these, six springs 102 extend between the frame structure 101 and the top side of the optical system, and three springs 102 extend between the frame structure 101 and the bottom side of the optical system 100. The three springs extending between the bottom side of the optical system 100 and the frame structure and are attached at a common point of the bottom side of the optical system 100. On their other end, the three springs are attached to the frame structure 101 so that the three connection points form an equilateral triangle. The six springs extend between the top side of the optical system 10 and the frame structure 101 in a manner that the connection points on the top side of the optical system 100 form an equilateral triangle and that the connection points on the frame structure 101 form an equilateral triangle. At each connection point on the frame structure 101 and on the optical system 100 there are two springs connected.

The springs 102 have a small spring constant so that the resonance frequency of the entire system is in the range between 1.5 Hz and 30 Hz. The resonance frequency is far lower than common mechanical noise sources so that the susceptibility of the systems to vibrations is strongly suppressed.

Moreover, it turns out that this spring arrangement efficiently locks all three translational and three rotational degrees of freedom in a sense that a restoring force is provided along all six directions. Hence, the optical system 100 is securely suspended in an equilibrium position, where it is strongly decoupled from external vibrations.

The previously described invention is designed to operate an open Fabry-Perot fiber cavity and may find several applications in the field of ultrasensitive microscopy and quantum technologies. For instance, it is possible to enhance quantum emitters within the cavity through the Purcell effect, resulting in higher emission rates, branching ratios and collection efficiencies. Open Fabry-Perot fiber cavities can be used to study a wide variety of emitters including nitrogen-, silicon-, tin- and germanium-vacancy centers in diamond, nanotube defects, telecom quantum dots and single rare earth ions. Moreover, the open nature of the cavity allows for the easy integration of 2D materials and the 3D tenability of the positioning assembly according to the present invention permits full exploration of the material. A main application is ultrasensitive microscopy since the resonant nature of the cavity strongly increases the scattering rate of samples. For instance, this technology has been used to find and explore single nanoparticles, gold nanorods and single-crystal diamond membranes.

The applicants and inventors acknowledge financial support from the European Union's Horizon 2020 research and innovation program under grant agreement No820391 within the Flagship on Quantum Technologies, NextGenerationEU (PRTR-C17.I1) and from Generalitat de Catalunya.

## Claims

1. A positioning assembly (10) for positioning a tip of an optical fiber (40), the positioning assembly (10) comprising:
a first positioning element (13) configured to define and adjust a position of the tip of the optical fiber (40),
a first piezoelectric element (14) having a first axis of expansion and/or contraction,
a second piezoelectric element (15) having a second axis of expansion and/or contraction substantially parallel to the first axis,
a first plate (11) contacted with the first piezoelectric element (14), and
a second plate (12) contacted with the second piezoelectric element (15),
wherein the first plate (11) and the second plate (12) are mechanically coupled to the first positioning element (13),
wherein the first plate (11) and the second plate (12) each act as a lever so that a movement of the first plate (11) and/or the second plate (12) in a direction along the first axis, induced by an expansion and/or contraction of the first piezoelectric element (14) and/or the second piezoelectric element (15) respectively, results in a movement of the first positing element (13), and
wherein the movement of the first positioning element (13) has a component perpendicular to the first axis.

2. The positioning assembly (10) according to claim 1, wherein a direction of the movement of the first positioning element (13) induced by the first piezoelectric element (14) is different from a direction of the movement of the first positioning element (13) induced by the second piezoelectric element (15).

3. The positioning assembly (10) according to claim 1 or 2, wherein a distance between the first plate (11) and a first fulcrum point (F1) is smaller than a distance between the first fulcrum point (F1) and the first positioning element (13), and/or
wherein a distance between the second plate (12) and a second fulcrum point (F2) is smaller than a distance between the second fulcrum point (F2) and the first positioning element (13).

4. The positioning assembly (10) according to any of the preceding claims, wherein the first piezoelectric element (14) and/or the second piezoelectric element (15) are piezoelectric stacks with an extension along the first axis of between 5 mm and 95 mm, in particular 20 mm to 50 mm, and/or
wherein the first positioning element (13) includes a V-shaped notch, in particular, wherein the V-shaped notch is positioned parallel to the first axis.

5. The positioning assembly (10) according to any of the preceding claims, further comprising a third piezoelectric element (22), in particular a piezoelectric stack, having a third axis of expansion and/or contraction, and
a second positioning element (21) configured to define and adjust a position of the tip of the optical fiber (40), the second positioning element (21) contacting the third piezoelectric element (22),
wherein an expansion and/or contraction of the third piezoelectric element (22) results in a movement of the second positioning (21) element along the third axis, and
in particular, wherein the third axis is substantially parallel to the first axis.

6. The positioning assembly (10) according to claim 5, further comprising a fourth piezoelectric element (23) attached to the second positioning element (21),
wherein the fourth piezoelectric element (23) is a shear piezoelectric chip or stack.

7. The positioning assembly (10) according to claim 6, wherein a top surface of the fourth piezoelectric element (23) is inclined with respect to the third axis,
wherein the inclination angle is between 2° and 30°, in particular between 5° and 15°, and/or
wherein the top surface of the fourth piezoelectric element (23) is provided with a groove (24).

8. The positioning assembly (10) according to any of the preceding claims, wherein the first piezoelectric element (14) is further provided with adjustment means (31) for adjusting the position of the first piezoelectric element (14) with respect to the first plate (11), and/or wherein the second piezoelectric element (15) is further provided with adjustment means (31) for adjusting the position of the second piezoelectric element (15) with respect to the second plate (12), and/or
the third piezoelectric element (22) is further provided with adjustment means for adjusting the position of the third piezoelectric element (22) with respect to second positioning element (21).

9. The positioning assembly (10) according to any of the preceding claims, further comprising a support structure (30),
wherein the support structure (30) comprises support alignment means for changing the position of the first positioning element (13),
in particular, wherein the positioning assembly (10) further comprising an adjustable spacer between the first positioning (13) element and the second positioning element (21), wherein the adjustable spacer is configured to adjust a distance between the first positioning element (13) and the second positioning element (21).

10. A fiber nanopositioner, comprising:
the positioning assembly (10) according to any of the preceding claims, and
an optical fiber (40) with a fiber tip (41),
wherein the first positioning element (13) is configured to adjust a position of the fiber tip (41) within a plane perpendicular to the first axis.

11. The fiber nanopositioner according to claim 10, wherein the positioning assembly (10) is a positioning assembly (10) according to claim 6 to 7, and
wherein the optical fiber (40) is attached to a/the top surface of the fourth piezoelectric element (23).

12. The fiber nanopositioner according to claim 11, wherein the fiber tip (41) protrudes from a front edge of the top surface of the fourth piezoelectric element (23) by 2 mm to 20 mm, in particular by 5 mm to 10 mm, and/or
wherein the optical fiber (40) is glued directly onto the top surface of the fourth piezoelectric element (23), and/or
wherein only a core and a cladding of the optical fiber (40) are glued directly onto the top surface of the fourth piezoelectric element (23).

13. An optical system (100), comprising:
the fiber nanopositioner according to any of claims 10 to 12, and
an optical assembly (50),
wherein the optical assembly (50) comprises:
a mirror (51) whose reflective surface faces the fiber tip (41) so that the fiber tip (41) and the mirror (51) form an optical resonator,
and in particular further comprises
a lens (52) arranged at a distance from the mirror (51) and configured to collimate light from the optical resonator transmitted through the mirror (51), and
mounting means for mounting the mirror (51) and the lens (52) at a fixed distance from each other.

14. The optical system (100) according to claim 13, wherein the mounting means (60) comprise a first barrel (61), a first retaining ring (63) and a second retaining ring (64), wherein the mirror (51) and the lens (52) are arranged within the first barrel (61) having a thread on its inside,
wherein the mirror (51) is fixed against a lip (66) at an end of the first barrel (61) by the threaded first retaining ring (63) inside the first barrel (61),
wherein the lens (52) is arranged at a fixed distance from the mirror (51) by the first retaining ring (63), and
wherein the lens (52) is fixed against the first retaining ring (63) by the threaded second retaining ring (64) inside the first barrel (61).

15. The optical system (100) according to claim 14, further comprising a second barrel (62) threaded on its inside and a third retaining ring (65),
wherein the first barrel (61) is also threaded on its outside and screwed inside the second barrel (62), and
wherein the first barrel (61) is locked inside the second barrel (62) by the threaded third retaining ring (65).

16. The optical system (100) according to claim 15, wherein the first barrel (61) and the third retaining ring (65) are simultaneously adjustable by a pair of concentric spanners (67), wherein the pair of concentric spanners (67) comprises an inner spanner (67a) and an outer spanner (67b),
wherein the inner spanner (67a) meshes with the first barrel (61), and
wherein the outer spanner (67b) meshes with the third retaining ring (65).

17. The optical system (100) according to any of claims 13 to 16, further comprising a frame structure (101) for supporting the optical system (100),
wherein the optical system (100) is suspended on multiple springs (102), and
wherein the springs (102) extend between the optical system (100) and the frame structure (101),
in particular, wherein an arrangement of the springs (102) locks all six degrees of freedom, including three translational degrees of freedom and three rotational degrees of freedom.
